# EUROPEAN PATENT APPLICATION

(11) **EP 3 023 614 A1**
(43) Date of publication of application: **25.05.2016**
(21) Application number: 14194090.8
(22) Date of filing: 20.11.2014
(51) Int. Cl.: F02C 7/047, F02C 7/08, F02C 7/143, F02C 7/18

(54) **Apparatus and method for cooling or heating the air inlet of a gas turbine**

(71) Applicant: Siemens Aktiengesellschaft, 80333 München (DE)
(72) Inventor: Levinson, Nicklas, 60580 Svärtinge (SE); Stuxberg, Anders, 61234 Finspong (SE)

(57) **Abstract**

The invention relates to an apparatus (1) for cooling or heating air at the inlet of at least a gas turbine which comprises:
- a first line (5) for the flow of a heat carrying medium, the first line (5) including a first heat exchanger (51) for exchanging heat between the heat carrying medium and the air to be provided to the inlet of at least a gas turbine,
- a second line (15) for the flow of the heat carrying medium in parallel with the first line (5), the second line (15) comprising a second heat exchanger (52) for heating the heat carrying medium,
- a third line (25) connected with the first line (5) for providing the heat carrying medium at a first temperature to a first end (5a) of first line (5) and receiving the heat carrying medium at a second temperature, from a second end (5b) of the first line (5).

## Description

### Field of invention

The present invention relates to an apparatus for cooling or heating the air at the inlet of a gas turbine (GT). Such apparatus is usable in association with a gas turbine for combined inlet air cooling for power augmentation and inlet air heating for anti-icing purpose and/or performance gain at part load. The present invention further relates to a method for cooling or heating the air at the inlet of a gas turbine (GT).

### Art Background

Some power plants have fuel supply in the form of Liquid Natural Gas (LNG).

The LNG is turned into gaseous phase (boiled off) in a regasification unit before being used as fuel by the power plant. The regasification requires heat which is normally supplied by heat exchange from a heat carrying glycol mixture which in turn is heated by heat exchange from e.g. ambient air or seawater.

Gas turbines (GT) installed in warm climates often have a system cooling the inlet air to avoid the decreased load capacity of the GT otherwise resulting as consequence of the reduced density of warm air.

Gas turbines operating in ambient temperatures between -5°C and +5°C combined with high air humidity have a risk of ice formation in the air filters and gas turbine inlet section. This risk is commonly mitigated by heating the gas turbine inlet air by heat exchange, e.g. from hot water or steam.

Gas turbines operating at part load commonly suffer from reduced efficiency in combined cycle application since the air flow sucked in through the compressor is not possible to reduce sufficiently by control methods within the gas turbine. A solution to this problem is provided by heating the gas turbine inlet air at part load helps reducing the air flow. If gas turbine load is maintained, heating the gas turbine inlet air increases the firing temperature. The added heat results also in increased gas turbine compressor outlet temperature, thus the fuel required to reach a certain firing temperature is reduced.

### Summary of the Invention

It may be an object of the present invention to provide an apparatus for efficiently combining, in a gas turbine, the inlet air cooling and heating functions defined above.

In order to achieve the objects defined above, an apparatus and a method according to the independent claims are provided. The dependent claims describe advantageous developments and modifications of the invention.

According to the present invention, an apparatus for cooling or heating air at the inlet of at least a gas turbine comprises:
- a first line for the flow of a heat carrying medium, the first line including a first heat exchanger for exchanging heat between the heat carrying medium and the air to be provided to the inlet of at least a gas turbine,
- a second line for the flow of the heat carrying medium in parallel with the first line, the second line comprising a second heat exchanger for heating the heat carrying medium,
- a third line connected with the first line for providing the heat carrying medium at a first temperature to a first end of first line and receiving the heat carrying medium at a second temperature, from a second end of the first line.

By "line" it is meant any means, for example a series of pipes or ducts, allowing the heat carrying medium to flow from one point to another of the apparatus or in a closed recirculation loop.

By "heat carrying medium" it is meant any fluid capable of exchanging heat with the air at the inlet of a gas turbine, either for heating or cooling it. For example, a mixture of water with a freeze protection agent, e.g. glycol, can be used as heat carrying medium.

The heat carrying medium may be provided to the first end of the first line at a first temperature and received by the third line from a second end of the first line, at a second temperature, higher than the first temperature. This, as a possible embodiment, may be achieved when the third line is connected to the first end and the second end of the first line in order to form a first recirculation loop for the heat carrying medium and the first line comprises regasification unit for providing heat to a LNG gas by means of the heat carrying medium. According to other possible variants, instead of the regasification unit, other cooling means can be used instead of the LNG regasification unit.

In all embodiments, when the second temperature is higher than the first temperature the first heat exchanger may be used for cooling the air at the inlet of the gas turbine.

This permits to efficiently integrate the gas turbine air cooling functions to the regasification unit (or other cooling source) in a simple manner, safeguarding functionality for both systems with no signal interface required. Independent operability, in particular as far as temperatures are concerned, of the first and third lines are assured by the possibility to activate the second line to recirculate part of the heat carrying medium flowing in the first line.

According to a possible embodiment of the present invention, the first line or the second line includes at least a first circulation pump for circulating the heat carrying medium through the first line and the second line in a second recirculation loop. As a possible variant embodiment, instead of the first circulation pump, the apparatus includes other pumping means for circulating the heat carrying medium through the first line and the second line in the second recirculation loop, for example a pipe installed from downstream a circulation pump of the third line.

The second recirculation loop allows the heat carrying medium to flow and be heated in the second heat exchanger and then to flow in the first heat exchanger in order to heat the air at the inlet of the gas turbine.

When the second recirculation loop is activated, the heat carrying medium flow cool down by flowing through the first line and in particular through the first heat exchanger, i.e. the second temperature at the second end is lower than the first temperature at the first end.

Advantageously, this permits to efficiently integrate chilling and heating functions, in particular utilising the first heat exchanger also for anti-icing operation in climate conditions requiring such system for gas turbine protection. In addition, the heating function can also be used to reduce airflow through the gas turbine at partial load conditions, which results in higher firing temperature at a given load, thus improving efficiency.

Advantageously, in the second heat exchanger the heat carrying medium is heated by a heat source at low temperature, thus permitting the recovery of waste heat. The heat source exchanging heat with the heat carrying medium in the second heat exchanger may be, for example, cooling water or cooling oil flowing from a cooling system of the gas turbine.

According to another possible embodiment, the second line comprises sectioning valves provided in the second line, upstream and downstream the second heat exchanger, for isolating the second line and, in particular, the second heat exchanger from the first line. When such sectioning valves are closed the first line is normally used to chill the air at the inlet of the gas turbine. When such sectioning valves are open, a circulation loop comprising the first line and the second line can be established.

According to further possible embodiments of the present invention, the third line includes a third heat exchanger for heating the heat carrying medium, in particular by means of sea water. In the third heat exchanger, instead of sea water, other heating media can be used, for example air.

According to another possible embodiment of the present invention, the third line includes a pressure-keeping device, in communication with the second end of the first line. Advantageously, such device compensates for thermal expansions due to temperature changes in the circulated heat carrying medium at varying operating conditions

According to yet another possible embodiment of the present invention, the first line includes a valve in communication with the first end of the first line for stopping the flow of the heat carrying medium from the third line towards the first heat exchanger. Advantageously, such valve permits to isolate the flow in the first line from the flow in the third line, but at the same time to maintain the connection between the first line and the pressure-keeping device.

According to yet another possible embodiment of the present invention, the second line comprises a by-pass branch for bypassing the second heat exchanger. Even when the sectioning valves upstream and downstream the second heat exchanger are closed, the by-pass branch permits the heat carrying medium to be circulated by the first circulation pump through the first and second line. In addition, the first line may comprise a temperature control upstream the first heat exchanger.

This permits, in the case the heat carrying medium flow to the gas turbine is approaching minimum allowable temperature for the operation of the first heat exchanger, to activate both the first circulation pump and the temperature control upstream the first heat exchanger for starting to control the heat carrying medium temperature upstream the first heat exchanger at a temperature slightly above the minimum allowable.

According to yet another possible embodiment of the present invention, the first line comprises a flow control, in particular comprising a pressure drop sensor and a temperature sensor. This permits to control the flow through the first line in both cooling and heating mode:
- when the first heat exchanger is used for cooling the air at the inlet of the gas turbine the rate is controlled such that the temperature of the heat carrying medium towards the third line is kept minimum required and preferably at sufficiently low temperature to fully utilise the cooling effect for the gas turbine inlet air,
- when the first heat exchanger is used for heating the air at the inlet of the gas turbine the rate is controlled such that the energy input is limited to what is required, for example at low energy levels when only the anti-icing function required.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 schematically illustrates a schematic diagram of an apparatus according to the present invention,
Fig. 2 schematically illustrates a schematic diagram of another embodiment of the apparatus of Fig. 1.

### Detailed Description

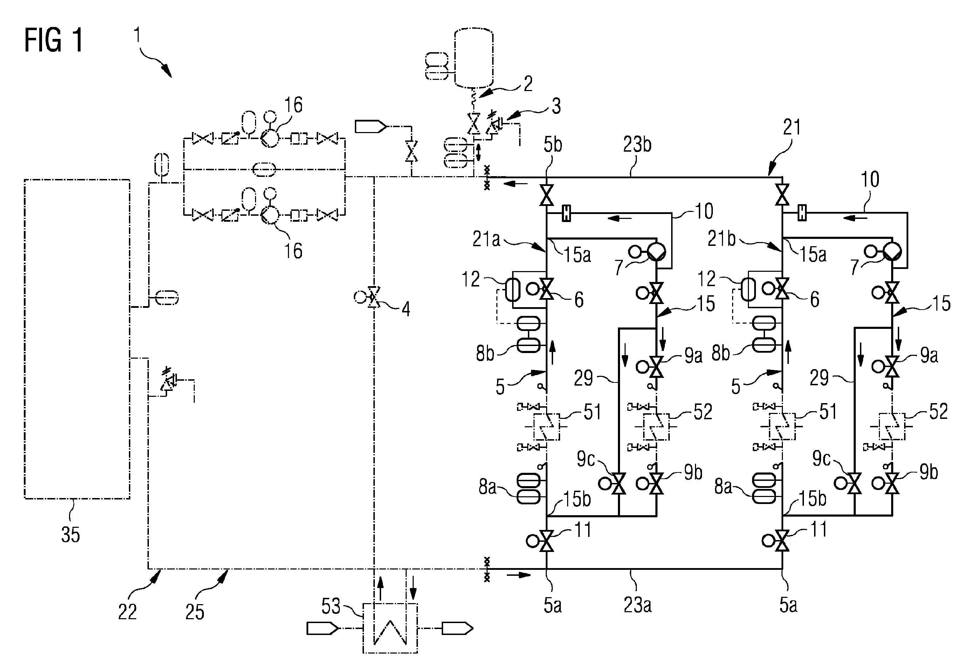

With reference to Fig. 1, an apparatus 1 for cooling or heating the air inlet of two gas turbines (not shown) comprises two main sections 21, 22, connected in a first recirculation loop. In both section the same heat carrying medium is circulated.

According to other embodiments of the present invention (not shown) the apparatus 1 can be used for cooling or heating the air inlet of a different number of gas turbines, for example one or more than two.

According to possible embodiments of the present invention, the heat carrying medium is water mixed with a freeze protection agent, e. g. glycol.

According to another possible embodiment of the present invention, the heat carrying medium is water without any freeze protection agent.

The first section 21 comprises two subsections 21a, 21b in parallel, each subsection being in connection with a respective gas turbine. Each subsection 21a, 21b comprises:
- a first line 5 for the flow of the heat carrying medium, including a first heat exchanger 51 for exchanging heat between the heat carrying medium and the air to be provided to the inlet of the respective gas turbine,
- a second line 15 for the flow of the heat carrying medium in parallel with the first line 5, the second line 15 comprising a second heat exchanger 52 for heating the heat carrying medium.

The first heat exchanger 51 may be, for example, of the coil type.

The first section 21 can be used both for chilling or heating (in particular for anti-icing purposes or efficiency improvement) the air at inlet of the gas turbines, as better specified further below.

The second section 22 comprises a third line 25 connected with to the first line 5 for providing the heat carrying medium at a first temperature to a first end 5a of first line 5 and receiving the heat carrying medium at a second temperature, different from the first temperature, from a second end 5b of the first line 5.

When the first section 21 is used for chilling the air at inlet of the gas turbines, each first line 5 is connected to the third line 25 and the second temperature is higher than the first temperature. In chilling mode, in the first recirculation loop, which consists of the two main sections 21, 22, the first section 21 supplies heat to the second section 22 by means of heat exchange in the gas turbine inlet. In turn, this increases load capacity of the gas turbine.

In the embodiments of the attached figures, the second section 22 supplies low grade heat to a LNG ("liquefied natural gas") regasification unit 35 and includes a heat exchanger 53 for heat exchange from seawater or, as an alternative, from ambient air.

According to other embodiments of the present invention (not shown), the second section 22 may include another heat source. When the first section 21 is used for chilling the air at inlet of the gas turbines, it is necessary that the second section 22 provides the heat carrying medium at a first temperature to the first end 5a of first line 5 and receives the heat carrying medium at a second temperature from the second end 5b of the first line 5.

The first section 21 comprises two branches 23a, 23b between which each of the subsections 21a, 21b extends, the first end 5a of the first line 5 being on a first branch 23a and the second end 5b being on a second branch 23b.

From the first end 5a to the second end 5b, the first line 5 includes in series:
- a motorized isolation valve 11 for isolating the first line 5 from the first branch 23a,
- a T section for connection with an output end 15b of the second line 15,
- a first upstream temperature sensor 8a for controlling the temperature of the heat carrying medium upstream the first heat exchanger 51,
- the first heat exchanger 51 for exchanging heat between the heat carrying medium and the air to be provided to the inlet of the respective gas turbine,
- a second downstream temperature sensor 8b for controlling the temperature of the heat carrying medium downstream the first heat exchanger 51,
- a control valve 6 for controlling the flow of the heat carrying medium in the first line 5, the control valve 6 including a sensor 12 for pressure drop measurement across the control valve 6. The control valve 6 also operates in connection with the upstream temperature sensor 8b. As a possible alternative, temperature sensor 8b is positioned downstream the control valve 6,
- a T section for connection with an input end 15a of the second line 15.

According to other possible embodiments of the present invention, control valve 6 may be upstream of the first heat exchanger 51.

The heat exchanger 51 may be positioned upstream or downstream the filter for air filtration of the gas turbine or, according to another possible embodiment of the present invention, the heat exchanger 51 may comprise two separate portions, one upstream and the other downstream the air filter of the gas turbine.

The presence of a motorized isolation valve 11 for each of the subsections 21a, 21b, permits to isolate each of the subsections 21a, 21b from the first branch 23a, independently from one another.

From the input end 15a to the output end 15b, the second line 15 includes in series:
- a recirculation pump 7, including a minimum flow protection 10, e.g. by a constant or controlled bleed off from the recirculation pump 7 outlet to a point in the first line 5 between the input end 15a and the second end 5b of the first line 5,
- a first sectioning valve 9a upstream the second heat exchanger 52,
- the second heat exchanger 52 for heating the heat carrying medium by means of an heat source, for example cooling water or cooling oil flowing from a cooling system of the respective gas turbine,
- a second sectioning valve 9b, downstream the second heat exchanger 52.

According to other possible embodiment of the present invention, the elements of the second line 15 may be disposed in another sequence, different from that described above.

According to another possible embodiment of the present invention (not shown), other pumping means may be used instead of the recirculation pump 7, for example a pipe installed from downstream a second circulation pump 16 in the third line 25.

The second line 15 may further optionally include a by-pass line 29 with a third sectioning valve 9c, for by-passing the first and second sectioning valves 9a, 9b and the second heat exchanger 52.

When cooling of the air at the inlet of the respective gas turbine is required, a flow of the heat carrying medium at a first temperature T1 is routed to the respective first heat exchanger 51, where the heat carrying medium is heated up to a second temperature T2, whilst the air is cooled down.

The flow-rate of the heat carrying medium is controlled by means of the control valve such that the second temperature T2 is kept above a minimum required but preferably at sufficiently low temperature to fully utilise the cooling effect for the gas turbine inlet air. The flow-rate of the heat carrying medium is also limited not to exceed a maximum allowed according to design. In this case the motorized isolation valve 11 is open and the recirculation pump 7 not operating.

In case the temperature of heat carrying medium to the first heat exchanger 51 is approaching the minimum allowable temperature (for the heat exchanger 51 operation) the recirculation pump 7 is activated. A modulating control starts to control the heat carrying medium temperature upstream the heat exchanger 51 at a value slightly above minimum allowable, by means of the upstream temperature sensor 8a. The second heat exchanger 52 in this case in the second line 15 is isolated by closing the first and second sectioning valves 9a, 9b and by-passed by opening the third sectioning valves 9c.

As an alternative, when the by-pass line 29 is not present, recirculation can be made through heat exchanger 52.

When heating of the air at the inlet of the respective gas turbine is required, a second recirculation loop of the heat carrying medium through the first line 5 and the second line 15 is created by operating the recirculation pump 7. This is necessary when there is the risk of ice formation at the turbine inlet or at the first stages, typically at ambient temperatures above -5°C and below +5°C and humidity above 80%.

In this case the first and second sectioning valves 9a, 9b are open and the by-pass line 29, if present, closed by means of the third sectioning valves 9c. The motorized isolation valve 11 is also closed.

The heat carrying medium passes through the second heat exchanger 52 where it is heated and then is routed to the first heat exchanger 51, where it heats the inlet air of the respective gas turbine.

In conventional dedicated anti-icing systems it is typically required a heat source at a temperature about 80°C. With the solution of the present invention, having the first heat exchanger 51 a larger size than the conventional heat exchangers used for anti-icing purposes, far lower heat source temperatures in the second heat exchanger 52 are acceptable. Waste heat from water and/or oil cooling systems of the gas turbine may be conveniently used for heating the heat carrying medium in the second heat exchanger 52.

Heat exchange from the cooling water system of the gas turbine may be conveniently utilized, e.g. by connecting the heat exchanger at a position downstream the heat exchanger for the gas turbine lube oil cooling, where the cooling water temperature is higher than at other positions in the cooling water system.

Through the circulation loop of the first and second line 5, 15 it is possible to modulate the flow rate of the heat carrying medium by means of the same control valve 6 used for flow control in the cooling operations above described. The flow may be controlled to limit the heat input in case of limited heat demand, e.g. during anti-icing operation. Since the control valve 6 characteristic is known, by measurement of the pressure drop across the control valve 6 e, through the sensor 12, and knowing the percent of the valve opening, the flow rate through the control valve 6 is calculated. Since the heat capacity of heat carrying medium is known, after calculating the flow rate through the control valve 6 and measuring the temperatures across the first heat exchanger 51, by means of the upstream and downstream temperature sensors 8a, 8b, the energy transferred from the heat carrying medium to the inlet air is calculated.

From the second end 5b to the first end 5a of the first line 5, the third line 25 includes in series:
- a positive pressure by a pressure-keeping system 2, which may consist, for example, of a closed expansion vessel 2a, of an expansion vessel at elevation (not shown) partly filled with pressurized gas or of a pressure holding pump (not shown) connected to an atmospheric tank, or other equivalent known system,
- a T section for connection with an input of the third sea water heat exchanger 53,
- one or more circulation pump 16 (two circulation pumps 16 in the embodiments of the attached figures),
- the LNG regasification unit 35. According to a different embodiment of the present invention (not shown), the circulation pumps are positioned downstream the LNG regasification unit 35 or within the scope of the regasification unit,
- a T section for connection with an output of the third sea water heat exchanger 53.

The pressure-keeping system 2 compensates for thermal expansions due to temperature changes in the circulated heat carrying medium at varying operating conditions. The pressure-keeping system 2 is normally in communication with the second end 5b of the first line 5 both during cooling and heating operations of the air at the inlet of the gas turbine. Overpressure protecting devices may be incorporated too, e.g. by one or more mechanical thermal expansion protection valve 3.

In the LNG regasification unit 35 the heat supplied, by means of the hot heat carrying medium coming from the first line 5 in cooling mode is used to convert the liquefied natural gas into gaseous phase. The use of a second heat carrying medium, typically propane, between the first heat carrying medium (glycol mixture) and the gas is possible.

According to other possible embodiments of the present invention (not shown), other heat exchanging means can be used instead of the LNG regasification unit 35, for example a chilling machine based on conventional refrigeration principles cooling the circulation to the GT whilst rejecting the heat to ambient air or elsewhere.

The flow rate of heat carrying medium through the third heat exchange 53 is controlled to match the LNG regasification unit 35 requirements by controlling a motorized valve 4 in the line to the output of third heat exchanger 53. According to other possible embodiments of the present invention (not shown), the control motorized valve 4 is in the line from the input of third heat exchanger 53. The control of the motorized valve 4 may set, for example, a constant flow rate sufficient for any operating condition within the LNG regasification unit 35 or it may change the flow rate of the heat carrying medium, according to actual requirements depending on LNG flow rate and heat carrying medium temperature. A control according to actual LNG regasification requirements results in better utilisation for gas turbine inlet air cooling as a larger quantity of heat then may be taken from the gas turbine inlet cooling.

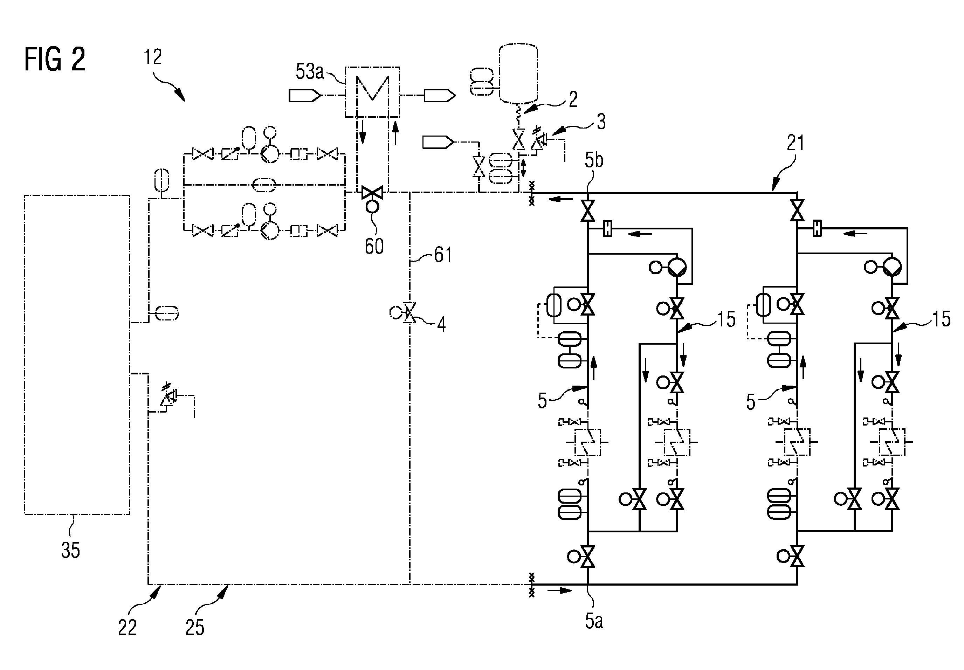

With reference to the embodiment in Fig. 2 the apparatus 1a is similar to the apparatus 1 of Fig. 1, the only difference being the fact that a third heat exchanger 53a is installed in series, between pressure-keeping system 2 and the pumps 16, instead of the third heat exchanger 53, in the parallel configuration shown in Fig. 1. In the embodiment of Fig. 2 the first section 21 needs to be bypassed, by means of a by-pass line between the input of the third heat exchanger 53a and the output of the LNG regasification unit 35, in order to achieve the flow rate of heat carrying medium needed for the LNG regasification unit 35.

The heat exchanger 53a should then preferably also be partly or fully bypassed, by means of a valve 60 between the input and the output of the third heat exchanger 53a, to achieve a sufficient use of the cooling effect for the gas turbine air inlet, e.g. the heat exchanger bypass may be modulated by a control loop measuring the heat carrying medium temperature exiting from the LNG regasification unit 35.

## Claims

1. An apparatus (1) for cooling or heating air at the inlet of at least a gas turbine, wherein the apparatus (1) comprises:
- a first line (5) for the flow of a heat carrying medium, the first line (5) including a first heat exchanger (51) for exchanging heat between the heat carrying medium and the air to be provided to the inlet of at least a gas turbine,
- a second line (15) for the flow of the heat carrying medium in parallel with the first line (5), the second line (15) comprising a second heat exchanger (52) for heating the heat carrying medium,
- a third line (25) connected with the first line (5) for providing the heat carrying medium at a first temperature to a first end (5a) of first line (5) and receiving the heat carrying medium at a second temperature, from a second end (5b) of the first line (5).

2. An apparatus (1) according to claim 1, wherein the third line (25) is connected to the first end (5a) and the second end (5b) of the first line (5) in order to form a first recirculation loop for the heat carrying medium.

3. An apparatus (1) according to claim 1, further including at least a first circulation pump (7) for circulating the heat carrying medium through the first line (5) and the second line (15) in a second recirculation loop.

4. An apparatus (1) according to claim 1, wherein the third line (25) comprises a regasification unit (35) from providing heat to a LNG gas by means of the heat carrying medium.

5. An apparatus (1) according to claim 1, wherein the third line (25) includes a third heat exchanger (53) for heating the heat carrying medium.

6. An apparatus (1) according to claim 5, wherein the heat carrying medium is heated in the third heat exchanger (53) by means of water.

7. An apparatus (1) according to claim 5, wherein the third heat exchanger (53) is connected in series to the first line (5) in communication with and the second end (5b) of the first line (5).

8. An apparatus (1) according to claim 1, wherein the third line (25) includes a pressure-keeping device (2) in communication with the second end (5b) of the first line (5).

9. An apparatus (1) according to claim 1, wherein the third line (25) includes at least a second pump (16) for circulating the heat carrying medium through said first line (5) and third line (25).

10. An apparatus (1) according to claim 1, wherein the first line (5) includes a valve (11) in communication with the first end (5a) of the first line (5) for stopping the flow of the heat carrying medium from the third line (25) towards the first heat exchanger (51).

11. An apparatus (1) according to claim 3, wherein the first pump (7) includes a constant or controlled bleed off of heat carrying medium for minimum flow protection.

12. An apparatus (1) according to claim 1, wherein the second line (15) comprises a by-pass branch (17) for bypassing the second heat exchanger (52).

13. An apparatus (1) according to claim 1, wherein in the second heat exchanger (52) heating the heat carrying medium is heated by means of a source of waste heat, in particular cooling oil from the gas turbine.

14. An apparatus (1) according to claim 1, wherein the first line (5) comprises a temperature control (8) upstream the first heat exchanger (51).

15. An apparatus (1) according to claim 1, wherein the first line (5) comprises a flow control (6) to control the flow through the first line (5).

16. A method of operating the apparatus (1) of claim 1 for cooling the air at the inlet of the gas turbine, wherein the method comprises the steps of:
- connecting the first line (5) to the third line (25) for creating a first recirculation loop;
- isolating the first line (5) from the second line (15) ;
- cooling the heat carrying medium in the third line (25) in order that the first temperature is lower than the second temperature;
- cooling the air at the inlet of the gas turbine in the first heat exchanger (51) of the first line (5).

17. A method of operating the apparatus (1) of claim 1 for heating the air at the inlet of the gas turbine, wherein the method comprises the steps of:
- connecting the first line (5) to the second line (15) for creating a second recirculation loop;
- isolating the first line (5) from the third line (25);
- heating the heat carrying medium in the second heat exchanger (52) of the second line (15);
- heating the air at the inlet of the gas turbine in the first heat exchanger (51) of the first line (5).
